# EUROPEAN PATENT SPECIFICATION

(11) **EP 2 463 116 B1**
(45) Date of publication and mention of the grant of the patent: **13.11.2013**
(21) Application number: 10194185.4
(22) Date of filing: 08.12.2010
(51) Int. Cl.: B44C 5/04

(54) **A method of manufacturing a panel including a wear resistant layer**
Verfahren zur Herstellung einer Platte mit einer verschleißbeständigen Schicht
Procédé de production d'un panneau comprenant une couche résistant à l'usure

(43) Date of publication of application: 13.06.2012
(73) Proprietor: Spanolux N.V. - Div. Balterio, 8710 Sint-Baafs-Vijve (BE)
(72) Inventor: Vermeulen, Bruno Paul Louis, 3680, Aldeneik-Maaseik (BE)
(74) Representative: De Vries & Metman

(56) References cited:
- EP-A1- 2 189 282
- WO-A1-03/061967
- WO-A1-2008/003662
- WO-A1-2009/018260

## Description

The invention relates to a method of manufacturing a panel including a wear resistant layer.

Such a method is known in the art. Typically in the field of laminated floor panels the demand of abrasion resistance is great. In the known method a thermosetting resin impregnated decor sheet of cellulose is placed on a wood-based substrate and a thermosetting resin impregnated overlay sheet of cellulose is placed on the decor sheet. The resin often consists of melamine formaldehyde. The stack of the substrate, decor sheet and overlay sheet is pressed at elevated temperature and pressure such that the resin cures while bonding the sheets to each other and to the substrate. As a result a rigid and moisture resistant product with a decorative surface layer is achieved. The overlay sheet is often provided with hard particles, for example particles of aluminium oxide, corundum, silicon carbide, zirconium oxide, quartz, glass or the like, which further increase the abrasion resistance of the resulting panel.

WO 2008/003662 is related to a film for application to the upper surface of a floor covering comprising: a blend of an acrylic resin and a fluoropolymer resin; and, optionally anti-slip particles wherein the film comprises two or more layers.

EP 2 189 282 is related to a substrate having at least one decor layer or overlay being applied to at least one surface of the substrate, wherein hard particles are distributed over the decor layer or overlay for improving the abrasion resistance of the decor layer or overlay. The hard particles have a coating containing a silane, preferably an aminosilane, providing a chargeable or electrically conductive surface for the coated particles.

It is an object of the present invention to provide a simplified manufacturing method.

In order to achieve this object the method comprises the steps of providing a substantially rigid substrate, providing wear-resistant particles, providing an ionomer, applying the wear-resistant particles and the ionomer onto the substrate, and pressing and/or melting the substrate, the wear-resistant particles and the ionomer together, wherein the ionomer is partly or fully melted.

The method according to the invention is relatively simple since an intermediate step of impregnating a cellulose sheet by a resin, such as required in case of conventionally laminating panels can be omitted. An ionomer is a polymer that comprises repeat units of both electrically neutral repeating units and a fraction of ionized units. The monomer may be supplied in a carrier material. An ionomer layer provides an elastic surface and can be transparent. Ionomer also tends to adhere to ink and other coatings such as lacquer or UV ink on substrates, quite well. Furthermore, the resulting panel appears to provide improved scratch-resistant, impact-resistant and wear-resistant properties and gives a comfortable feeling and advantageous acoustical characteristics. The wear-resistant particles may be made of corundum or an alternative material. Compared to manufacturing conventional laminates including resin impregnated cellulose sheets, in the method according to the present invention the temperature and/or pressure level is reduced to form the panel. In case of melting the materials to each other, the material that partly or fully melts may be the ionomer.

The substrate may be wood-based such as MDF, HDF, or the like, but it may also be a polymeric composite like Wood Plastic Composite (WPC). The thickness of the substrate will be 3-20 mm, in practice, whereas the resulting wear layer of the ionomer including the wear-resistant particles may be 200-1000 µm. In practice, the E-module of the substrate may be higher than 1000 N/mm² and preferably higher than 4000 N/mm², as measured according to NEN-EN 310.

In a preferred embodiment at least one of the wear-resistant particles and the ionomer is applied as a powder. The powder can be scattered onto the top of the substrate in a simple way. The thickness of the scattered layer can be controlled easily which provides the opportunity to vary the layer thickness in a flexible way. It is also possible to arrange two or more scattering devices behind each other. The ionomer can be powdered by means of a cryogenic process and pulverizing the material afterwards.

In a specific embodiment both the wear-resistant particles and the ionomer are provided as a powder and mixed before applying the mixture onto the substrate.

A decoration pattern may be printed on the substrate before applying the wear-resistant particles and the ionomer onto the substrate. The pattern may be printed via non-contact printing or contact printing. More specifically, non-contact printing may be digital printing and contact printing may be direct printing. In an alternative embodiment a decoration sheet is placed on the substrate before applying the wear-resistant particles and the monomer onto the decoration sheet.

Alternatively, the ionomer is provided as a film comprising the wear-resistant particles, which film is placed onto the substrate before the pressing step. The film may be manufactured by extrusion. In that case the ionomer may be prepared by supplying an ionomer film, supplying the wear-resistant particles and scattering the wear-resistant particles onto the film. At least an additional layer may be co-extruded to the ionomer film. For example, the additional layer is a water barrier layer, preferably a polyethylene layer. Such a layer may have a thickness of 10 µm, for example. Additional layers may provide extra desired physical properties to the resulting panel.

Before and/or during pressing at least the ionomer is heated. It is also possible to heat the whole intermediate product before and/or during pressing.

In a specific embodiment the ionomer is heated above its melting temperature.

During the method of manufacturing additional layers may be applied between the ionomer layer and the substrate and/or on top of the ionomer layer, for example polyurethane layers or other coatings.

It is noted that it is also possible to perform the method with a wood-based substrate and without applying the wear-resistant particles, such that the method comprises the steps of providing a wood-based substrate, providing an ionomer, applying the ionomer onto the substrate, and pressing the substrate and the ionomer together. In this case the ionomer may also be applied as a powder.

The invention is also related to a panel which is manufactured according to the method as described hereinbefore, which panel is provided with locking means for locking the panel to an adjacent panel.

The invention will hereafter be elucidated with reference to the very schematic drawings showing embodiments of the invention by way of example.

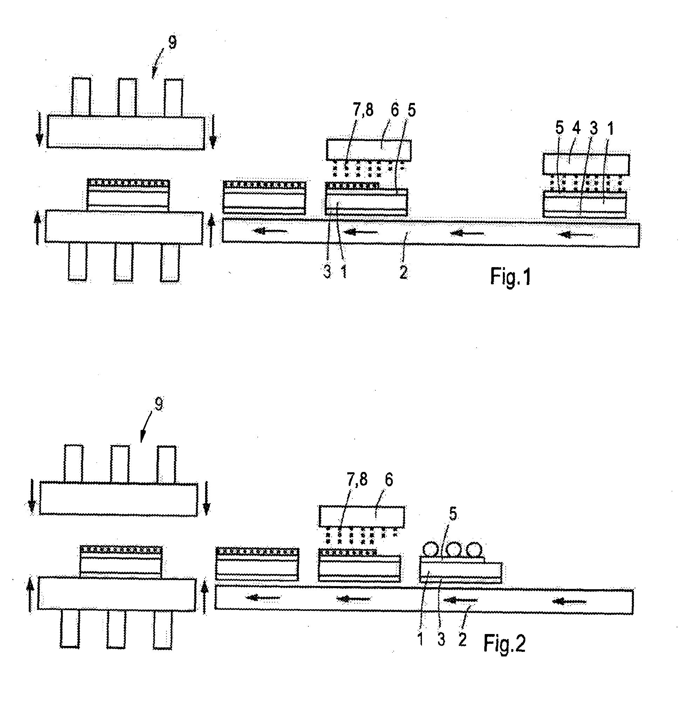

Figs. 1-6 are illustrative views of embodiments of the method according to the invention.

Fig. 1 illustrates an embodiment of the method of manufacturing a panel according to the invention. The panel is suitable for use on a floor and is therefore provided with a wear layer. Nevertheless, the panel and the method according to the invention can also be used in alternative fields such as panels for walls, ceilings, furniture or the like. Referring to Fig. 1 a substrate 1 is supplied from the right side by a conveyor 2. The substrate 1 is rigid and made of a wood-based material such as MDF, HDF, or the like, but alternative materials like polymeric composites are also conceivable. The lower side of the substrate 1 is provided with a balancing layer 3. In the embodiment as illustrated in Fig. 1 a digital printer 4 prints a decoration pattern 5 onto the substrate 1.

The substrate 1 including the decoration pattern 5 is conveyed to a scattering unit 6. The scattering unit 6 sprays or scatters a powdered mixture of an ionomer 7 and wear-resistant particles 8 onto the substrate 1 including the decoration pattern 5.

In a next step the stack of balancing layer 3, substrate 1 including the decoration pattern 5 and the layer of ionomer 7 and wear-resistant particles 8 is pressed together in a press 9. In this embodiment the stack is pressed discontinuously, but it is also conceivable to perform the illustrated method continuously. The stack is also heated in the press 9 such that the individual materials are melted to each other due to partly or entirely melting of the ionomer, for example. The press 9 may be adapted such that a surface texture is provided on the upper side of the panel, for example a pattern of wood nerves or stone.

The ionomer 7 may be selected from the group known as Surlyn^{®} of Dupont or Iotek of Exxon Mobil and the wear-resistant particles may be corundum particles, but alternative materials are conceivable.

Fig. illustrates a similar embodiment as Fig. 1, but in this case the decoration pattern 5 is directly printed onto the substrate 1.

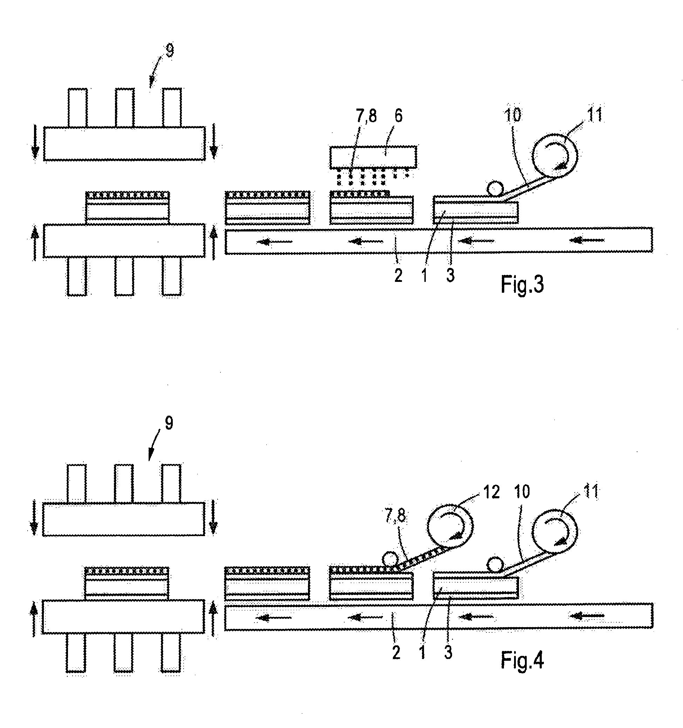

In the embodiment of the method as illustrated in Fig. 3 a decoration sheet 10 is placed on the substrate 1. The decoration sheet 10 may be provided with a decoration pattern and may be made of a polymer, a paper sheet, or a paper sheet impregnated with a resin. In the latter case the paper sheet may be impregnated at a side which is intended to be directed to the substrate. This reduces any adverse effect in adherence between the decoration sheet and the layer of ionomer 7 and wear-resistant particles 8 at the opposite side of the decoration sheet. As shown in Fig. 3 the decoration sheet 10 is supplied from a decoration sheet roll 11. In a next step the ionomer 7 and the wear-resistant particles 8 are applied in a similar way as illustrated in Figs. 1 and 2.

Alternatively, the ionomer 7 is supplied as a film from an ionomer film roll 12, see Fig. 4. The film contains the wear-resistant particles 8. As shown in Fig. 4 the ionomer film 7 including the wear-resistant particles 8 is placed onto the stack of the substrate 1 and the decoration sheet 10 and then conveyed to the press 9. In the method as illustrated in Fig. 4 the ionomer film 7 could be supplied without wear-resistant particles if the resulting panel is intended for use under less severe conditions.

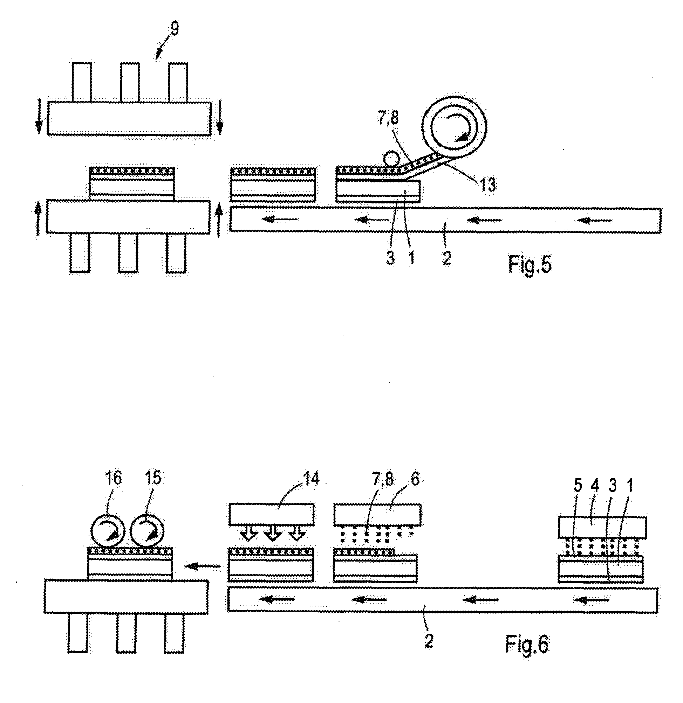

In still another embodiment the ionomer film 7 may be supplied by extrusion. In this case, the ionomer film roll 12 is replaced by an ionomer extrusion device. During the extrusion process the wear-resistant particles 8 can be added to the ionomer 7. It is also possible to add an additional layer 13 to the ionomer film 7 by co-extrusion, as illustrated in Fig. 5. The additional layer may be an adhesive layer, for example. The ionomer film 7 can also be supplied by means of extrusion coating, for example extrusion on a paper sheet or a polymeric film or the like. Alternatively, a blown-extrusion process is conceivable in order to create a plurality of layers, including for example an adherence layer, a polyethylene barrier layer or the like.

In Fig. 6 another alternative embodiment is illustrated. In this case, before the pressing step the upper side of the ionomer 7 is heated in order to melt the wear-resistant particles to the ionomer 7. In this case a UV heater 14 is used, but alternative heating means are conceivable. Fig. 6 also shows a calender or press roller 15 for pressing the layers 3, 5, 7, 8 and the substrate 1 together, followed by an embossing roller 16 for creating a surface texture. In practice it is often desired that the surface texture pattern corresponds with the decoration pattern 5, for example the decoration pattern resembles a wood pattern and the texture comprises depressed pores or nerves.

After pressing the resulting product may be cut into individual panels, for example rectangular panels. In a next step the edges of the panels may be provided with locking means to interlock adjacent panels in order to form a flooring, for example. The locking means may comprise a tongue and a corresponding groove, but alternative locking means are conceivable.

The invention is not limited to the embodiment as described above and shown in the drawings, which can be varied in several ways without departing from the scope of the invention. For example, additional layers may be applied between the ionomer layer and the substrate and/or on top of the ionomer layer, for example polyurethane layers or other coatings, possibly by extrusion. These additional layers may further improve scratch resistance of the resulting panel. Additional layers on the top of the ionomer layer may be applied after the pressing step. For improving adherence between any of the layers, additional tie layers, primers or surface treatments such as pyrolysis, corona discharge treatment or the like may be performed.

## Claims

1. A method of manufacturing a panel including a wear resistant layer (7, 8), comprising the steps of:
providing a substantially rigid substrate (1),
providing wear-resistant particles (8),
providing an ionomer (7),
applying the wear-resistant particles (8) and the ionomer (7) onto the substrate (1),
pressing and/or melting the substrate (1), the wear-resistant particles (8) and the ionomer (7) together, wherein the ionomer is partly or fully melted.

2. A method according to claim 1, wherein at least one of the wear-resistant particles (8) and the ionomer (7) is applied as a powder.

3. A method according to claim 1 or 2, wherein both the wear-resistant particles (8) and the ionomer (7) are provided as a powder and mixed before applying the mixture (7, 8) onto the substrate (1).

4. A method according to one of the preceding claims, wherein a decoration pattern (5) is printed on the substrate (1) before applying the wear-resistant particles (8) and the ionomer (7) onto the substrate (1).

5. A method according to claim 4, wherein the pattern (5) is printed via non-contact printing or contact printing.

6. A method according to one of the claims 1-3,
wherein a decoration sheet (10) is placed on the substrate (1) before applying the wear-resistant particles (8) and the ionomer (7) onto the decoration sheet (10).

7. A method according to one of the preceding claims, wherein the ionomer (7) is provided as a film comprising the wear-resistant particles (8), which film (7) is placed onto the substrate (1) before the pressing step.

8. A method according to claim 7, wherein the film (7) is manufactured by extrusion.

9. A method according to claim 7 or 8, wherein at least an additional layer (13) is co-extruded to the ionomer film (7).

10. A method according to claim 9, wherein the additional layer (13) is a water barrier layer, preferably a polyethylene layer.

11. A method according to one of the preceding claims, wherein before and/or during pressing at least the ionomer (7) is heated.

12. A method according to claim 11, wherein before pressing the ionomer (7) is heated above its melting temperature.

13. A method according to one of the preceding claims, wherein the edges of the panel are provided with locking means for locking the panel to an adjacent panel.

## Patentansprüche

1. Verfahren zur Herstellung eines Paneels mit einer verschleißbeständigen Schicht (7, 8), mit den folgenden Schritten:
Bereitstellen eines weitgehend steifen Substrats (1),
Bereitstellen verschleißbeständiger Teilchen (8),
Bereitstellen eines Ionomers (7),
Aufbringen der verschleißbeständigen Teilchen (8) und des Ionomers (7) auf das Substrat (1),
Zusammenpressen und/oder Verschmelzen des Substrats (1), der verschleißbeständigen Teilchen (8) und des Ionomers (7), wobei das Ionomer teilweise oder vollständig geschmolzen wird.

2. Verfahren nach Anspruch 1, wobei die verschleißbeständigen Teilchen (8) oder das Ionomer (7) oder beide als Pulver aufgebracht werden.

3. Verfahren nach Anspruch 1 oder 2, wobei sowohl die verschleißbeständigen Teilchen (8) als auch das Ionomer (7) als Pulver bereitgestellt und vermischt werden, bevor das Gemisch (7, 8) auf das Substrat (1) aufgebracht wird.

4. Verfahren nach einem der vorstehenden Ansprüche, wobei ein Dekormuster (5) auf das Substrat (1) aufgedruckt wird, bevor die verschleißbeständigen Teilchen (8) und das Ionomer (7) auf das Substrat (1) aufgebracht werden.

5. Verfahren nach Anspruch 4, wobei das Muster (5) durch kontaktfreien Druck oder Kontaktdruck aufgedruckt wird.

6. Verfahren nach einem der Ansprüche 1-3, wobei eine Dekorfolie (10) auf das Substrat (1) aufgelegt wird, bevor die verschleißbeständigen Teilchen (8) und das Ionomer (7) auf die Dekorfolie (10) aufgebracht werden.

7. Verfahren nach einem der vorstehenden Ansprüche, wobei das Ionomer (7) als Film mit den verschleißbeständigen Teilchen (8) bereitgestellt wird, wobei der Film (7) von dem Pressschritt auf das Substrat (1) aufgelegt wird.

8. Verfahren nach Anspruch 7, wobei der Film (7) durch Extrusion hergestellt wird.

9. Verfahren nach Anspruch 7 oder 8, wobei mindestens eine weitere Schicht (13) mit dem Ionomerfilm (7) koextrudiert wird.

10. Verfahren nach Anspruch 9, wobei die weitere Schicht (13) eine Wassersperrschicht, vorzugsweise eine Polyethylenschicht ist.

11. Verfahren nach einem der vorstehenden Ansprüche, wobei vor und/oder während des Pressens zumindest das Ionomer (7) erhitzt wird.

12. Verfahren nach Anspruch 11, wobei vor dem Pressen das Ionomer (7) über seine Schmelztemperatur erhitzt wird.

13. Verfahren nach einem der vorstehenden Ansprüche, wobei die Kanten des Paneels mit Verriegelungseinrichtungen zum Verriegeln des Paneels an einem benachbarten Paneel versehen sind.

## Revendications

1. Procédé de fabrication d'un panneau comprenant une couche résistante à l'usure (7, 8), comprenant les étapes consistant à :
fournir un substrat sensiblement rigide (1),
fournir des particules résistantes à l'usure (8),
fournir un ionomère (7),
appliquer les particules résistantes à l'usure (8) et le ionomère (7) sur le substrat (1),
presser et/ou faire fondre le substrat (1), les particules résistantes à l'usure (8) et le ionomère (7) ensemble, dans lequel le ionomère est en partie ou entièrement fondu.

2. Procédé selon la revendication 1, dans lequel au moins l'un parmi les particules résistantes à l'usure (8) et le ionomère (7) est appliqué sous forme de poudre.

3. Procédé selon la revendication 1 ou 2, dans lequel à la fois les particules résistantes à l'usure (8) et le ionomère (7) sont fournis sous forme de poudre et mélangés avant d'appliquer le mélange (7, 8) sur le substrat (1).

4. Procédé selon l'une quelconque des revendications précédentes, dans lequel un motif de décoration (5) est imprimé sur le substrat (1) avant l'application des particules résistantes à l'usure (8) et de le ionomère (7) sur le substrat (1).

5. Procédé selon la revendication 4, dans lequel le motif (5) est imprimé via l'impression sans contact ou l'impression par contact.

6. Procédé selon l'une quelconque des revendications 1 à 3, dans lequel une feuille de décoration (10) est placée sur le substrat (1) avant d'appliquer les particules résistantes à l'usure (8) et le ionomère (7) sur la feuille de décoration (10).

7. Procédé selon l'une quelconque des revendications précédentes, dans lequel le ionomère (7) est fourni sous forme de film comprenant les particules résistantes à l'usure (8), lequel film (7) est placé sur le substrat (1) avant l'étape de pressage.

8. Procédé selon la revendication 7, dans lequel le film (7) est fabriqué par extrusion.

9. Procédé selon la revendication 7 ou 8, dans lequel au moins une couche supplémentaire (13) est coextrudée au film de ionomère (7).

10. Procédé selon la revendication 9, dans lequel la couche supplémentaire (13) est une couche d'étanchéité à l'eau, de préférence une couche de polyéthylène.

11. Procédé selon l'une quelconque des revendications précédentes, dans lequel, avant et/ou pendant le pressage, au moins le ionomère (7) est chauffé.

12. Procédé selon la revendication 11, dans lequel, avant le pressage, le ionomère (7) est chauffé au-dessus de sa température de fusion.

13. Procédé selon l'une quelconque des revendications précédentes, dans lequel les arêtes du panneau sont dotées de moyens de verrouillage pour le verrouillage du panneau sur un panneau adjacent.
